# EUROPEAN PATENT SPECIFICATION

(11) **EP 3 659 429 B1**
(45) Date of publication and mention of the grant of the patent: **18.08.2021**
(21) Application number: 19206265.1
(22) Date of filing: 30.10.2019
(51) Int. Cl.: A01D 80/02

(54) **REEL TINE**
HASPELZINKEN
DENT DE RABATTEUR

(30) Priority: 28.11.2018 GB 201819332
(43) Date of publication of application: 03.06.2020
(73) Proprietor: AGCO International GmbH, 8212 Neuhausen am Rheinfall (CH)
(72) Inventor: De Bacco, Davide, 36042 Breganze (IT); Bernadelle, Alessandro, 36042 Breganze (IT)
(74) Representative: AGCO Intellectual Property Department

(56) References cited:
- EP-A2- 0 475 405
- AU-B2- 2006 310 985
- US-A- 3 066 470
- US-A- 3 698 172
- US-A1- 2013 327 009

## Description

### Field

The present invention relates to reel tines such as typically found on the reel of the header of a combine harvester. In particular, the invention relates to a means of attachment of such tines to a bar of such a reel.

### Background

As used herein, the term "bolt" means and includes a threaded shaft configured to be used, in conjunction with a nut, to secure two or more parts together. Threads on bolts are straight (i.e., not tapered) so that the nut can be rotated along the threads of the bolt.

As used herein, the term "screw" means and includes a threaded shaft configured to be used, without a nut, to secure two or more parts together. Threads on screws are may be tapered or straight, and the threads may engage with one or more of the parts to be connected.

Combine harvesters commonly comprise 'reels' on the upper portion of their headers for drawing the upper part of crops towards the harvester as it traverses a field, so that a cutterbar of the header can positively engage and cut the crops at a point lower down. Such reels are usually provided with tines that help the reel engage the crops.

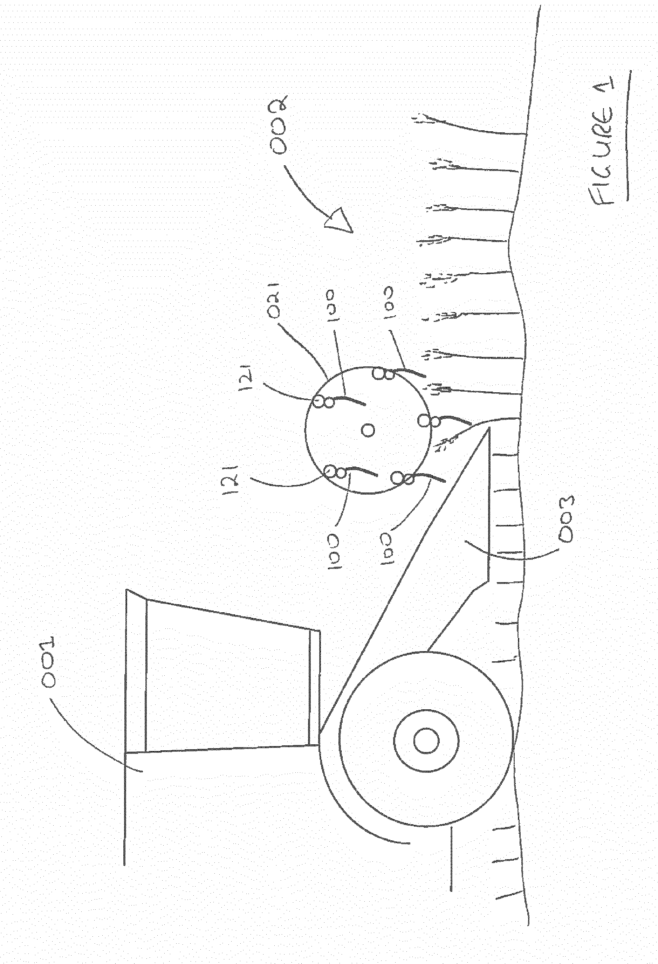

Figure 1 shows a partial view of a typical combine harvester 001 crossing a field of crops 002 with a reel 012 drawing crops towards a header 003.

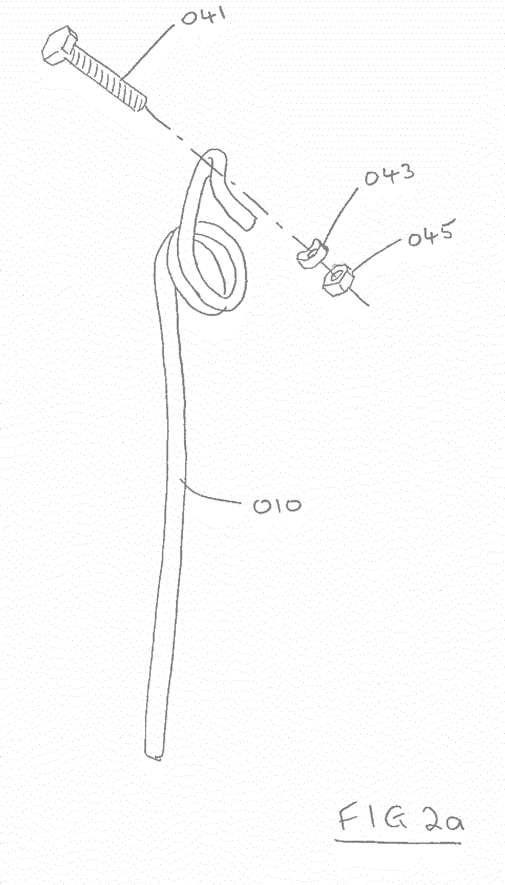

One type of tine typically comprises a steel round bar or thick wire, which is bent into form so that it has two portions-a generally longitudinal 'finger' portion which actually engages with the crops, and a curly flexible spring portion which can accommodate shocks and forces so as to firstly ensure gentle crop handling and secondly prevent damage to or bending of the straight portion. Nonetheless, tines do on occasion require removal and replacement/refitting. Various means and methods of attaching such tines to a reel bar exist, but the standard method involves the tine being formed with a third portion comprising a fixing loop, which is then used to attach the tine to the reel bar with a nut, a bolt, and at least one washer. Figure 2a shows such a tine 010 along with its nut 045, bolt 041, and washer 043, which is fixed to a reel bar in a manner well known to one skilled in the art.

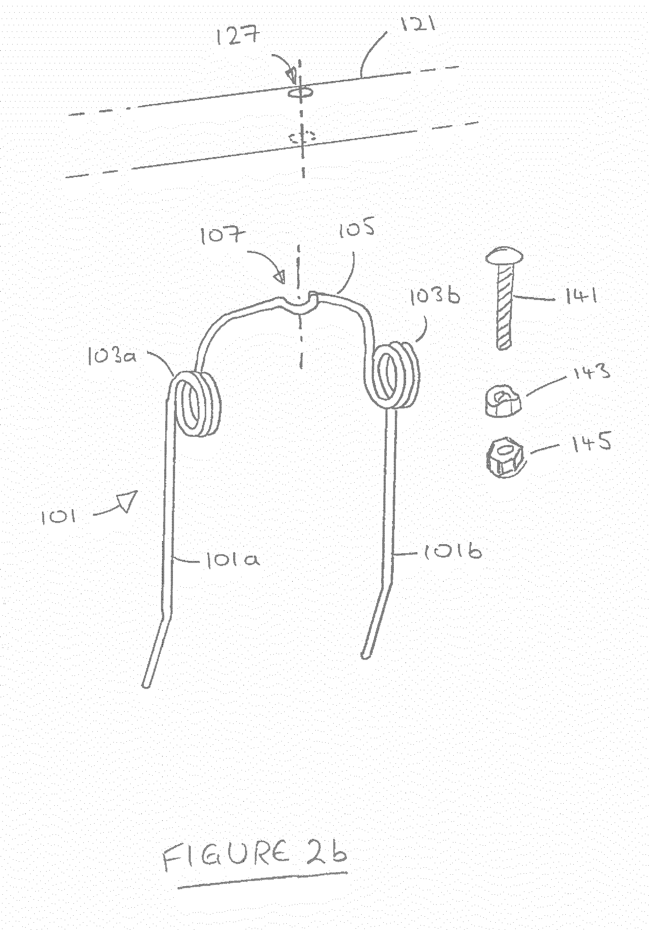

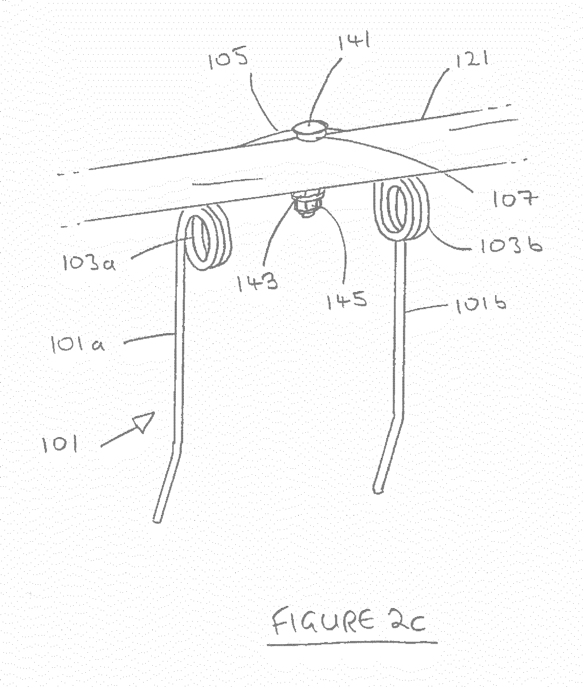

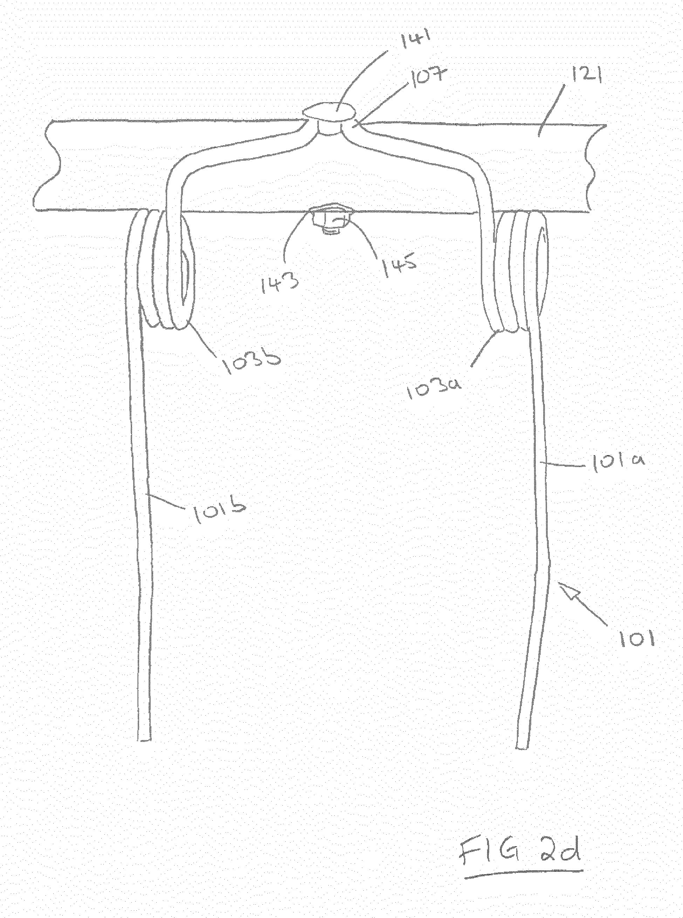

Figure 2b shows another typical prior art example of a steel bar tine attachment to a reel bar 121. In this example, the tines are bent and formed from steel bar as a pair 101, with a joining portion 105 joining the 'top' of two tines (each having a finger portion 101a, 101b, and a spring portion 103a, 103b) together, and further this joining portion formed so as to provide a fixing hole 107. As with the single steel tine of Figure 2a, the tine pair is bolted to the reel bar by use of a bolt, a washer and a nut. The full assembly is shown in Figure 2c and 2d.

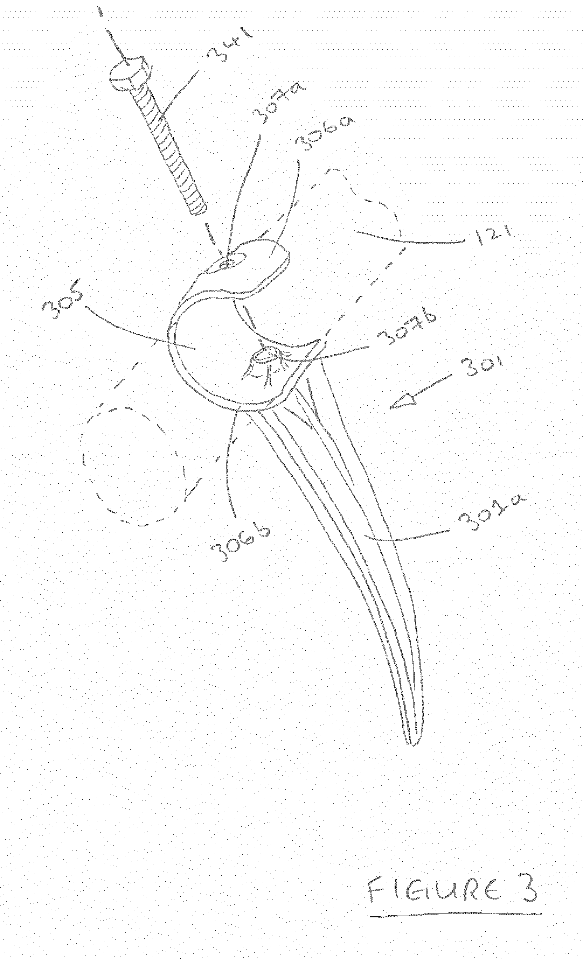

An alternative type of tine is plastic. Such plastic tines can come in many shapes and forms. Plastic tines typically have a generally longitudinal 'finger' portion which engages with the crops, and a reel fixing portion for attaching the tine to a reel bar. A typical plastic tine 301 is shown in Figure 3. This tine 301 is provided with a C-shaped portion 305 at the top of the finger portion 301a, with a through hole 307a at the top end of the C-shaped portion 305 and a receiving hole 307b in the bottom end of the C-shaped portion 305, which also corresponds to the shank of the finger portion 301a. Accordingly, this tine 301 is comparatively simply fitted to a reel bar by the use of a single screw 341. An example of such a tine is disclosed in European patent application EP 0 475 405 A2.

On occasion, a user may wish to replace steel tines on a reel with plastic tines, or vice versa. This may be for reasons of different crop types, different crop conditions, or other reasons. However, to put steel tines on a reel bar not only requires a nut, a bolt, and a washer, it is also a relatively time-consuming process, requiring the fitting of the bolt through the tine and the reel bar, then the addition of a washer and a nut to the bolt, and then usually the use of two spanners or wrenches-one on the nut and one on the bolt-to tighten the whole assembly in place.

An improved means of attaching steel tines to a reel bar, or an improved tine combining the best elements and advantages of existing steel and plastic tines, would be desirable.

### Summary

Accordingly there is provided in an aspect a tine as claimed in claim 1.

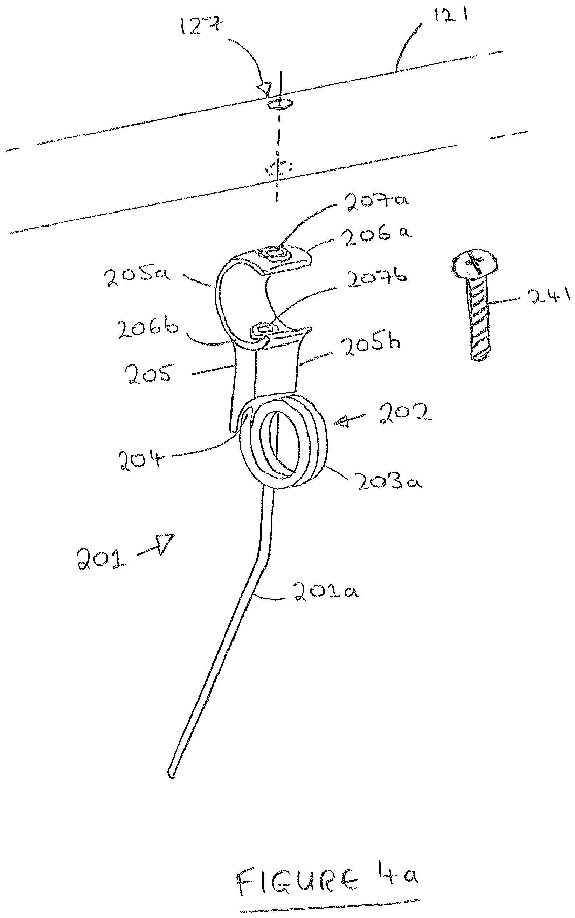

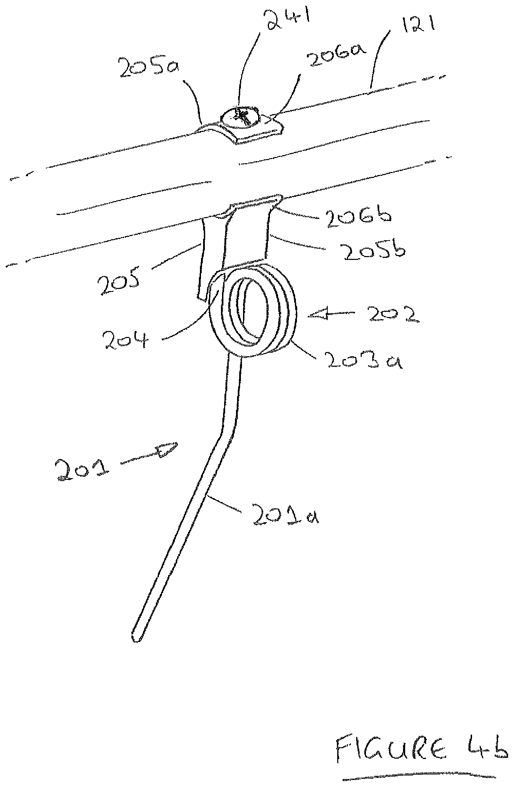

An advantage of this is that in order to attach a steel tine to a reel bar, the only additional item needed is a single screw. A steel tine may thus be removed or replace on a reel as easily as a plastic one, with fewer parts and in less time than for a standard steel tine. The tine is placed on a reel bar, with a through hole and a receiving hole aligned with a hole in the reel bar, with one portion of a fixing element either side of the bar, and a screw is inserted through the through hole of the first portion of the fixing element, through the bar, and into the receiving hole of the second portion of the fixing element, requiring only tightening. This compares favourably to the bolt, washer, and nut required to attach the tines of Figures 2a through 2d to the reel bar. Even though the prior art tine attachment of Figures 2b, 2c, and 2d effectively provides 2 tine fingers per unit compared to the one tine finger per unit of Figure 2a, or the embodiment of Figures 4 to 7, the number of parts is still lower for the tine embodiments disclosed herein (2 screws per 2 tine fingers as opposed to 1 bolt, 1 washer and 1 nut per 2 tine fingers). The fixing of the tines to the reel bar is also easier, only requiring the insertion and tightening of a single screw without needing to also fit a washer and nut to a bolt and use two spanners or wrenches for tightening.

The finger portion of the tine is advantageously metallic and thus resistant to damage, whilst the plastic fixing element is easily fitted to the reel bar.
The fixing element may be provided with a push-fit or interference fit hole for receiving a stub portion of the metal element.

In embodiments, the stub portion may be threaded, either to cooperate with a corresponding thread in the fixing element, or with a self-tapping thread.

In embodiments, the tine may be manufactured by moulding the fixing element around the stub portion of the metal element.

In embodiments, the through hole in the first portion of the fixing element, and/or the receiving hole in the second portion of the fixing element, may also be threaded.

In embodiments, the first and second portions of the fixing element may be opposing arms of a 'C' or 'U'-shaped portion of the fixing element. If the fixing element is provided with a 'C'-shaped portion, then it can be clipped on to the reel bar and may hold itself in place prior to the insertion of the fixing screw, which further assists in making the fixing of the tine to the reel bar easier.

### Brief Description of the Drawings

The invention will now be described in more detail by reference to the attached Figures.
Figure 1 shows a partial schematic view of a typical combine harvester 001 crossing a field of crops 002, with a reel 021 having reel bars 121 drawing crops towards a header 003, with tines 100 on the reel bars 121.
Figure 2a shows an existing single-finger steel tine 010 for affixing to a reel bar, along with a bolt 014, washer 043, and nut 045 for holding the tine 010 in place.
Figure 2b shows an existing two-finger steel tine 101 for affixing to a shown portion of a reel bar 121, along with a bolt 141, washer 143, and nut 145 for holding the tine 101 in place.
Figures 2c and 2d show the twin steel tine 101 of Figure 2b, fixed to the portion of reel bar 121 with the bolt 141, washer 143, and nut 145.
Figure 3 shows a plastic tine 301, with a partial dotted view of a portion of a reel bar 121, along with the single screw 341 necessary to attach the tine 301 to the bar 121.
Figure 4a shows an embodiment of a tine 201 in accordance with the present invention and a portion of reel bar 121, as well as a screw 241 for holding the tine 201 in place.
Figure 4b shows the tine 201 of Figure 4, screwed in place to the portion of reel bar 121 with the screw 241.
Figure 5a shows a cross-sectional view through a fixing element 205 of the tine 201 of Figures 4a and 4b. Figure 5a also shows a view of a metal element 202 of the tine 201. Figure 5b shows the fixing element 205 in cross-section with the metal element 202 in place.
Figures 6, 7, 8, and 9 show variant embodiments of tine fixing elements 605, 705, 805, and 905 according to the invention.

### Detailed Description

Figure 1 shows a partial schematic view of a typical combine harvester 001 crossing a field of crops 002, with a reel 021 having reel bars 121 drawing crops towards a header 003, with tines 100 on the reel bars 121. This arrangement will be familiar to those skilled in the art.

Figure 2a shows an existing single steel tine 010 for affixing to a portion of a reel bar. It affixes to the reel bar with a bolt 041 in combination with washer 043 and nut 045 in a manner familiar to those skilled in the art.

Figure 2b shows an existing two-finger steel tine 101 for affixing to a shown portion 121 of a reel bar. The reel bar 121 is cylindrical and is provided with a through hole 127 for the purpose of affixing tines to it. Tine 101 has two finger portions 101a and 101b, two spring portions 103a and 103b, and a joining portion 105 which is provided with a tight bend 107 to create a fixing hole for receiving bolt 141 in combination with washer 143 and nut 145.

As can be seen in Figure 2c and 2d, bolt 141 is inserted through the "hole" partially formed by tight bend 107 of the tine, through the hole 127 of the reel bar, and is then held in place with washer 143 (which is shaped to accommodate the curvature of the reel bar) and nut 145. This fitting requires three items: bolt 141, washer 143 and nut 145.

Figure 3 shows a plastic tine 301, with a partial dotted view of a portion of a reel bar 121, along with the single screw 341 necessary to attach the tine 301 to the bar 121. Plastic tine 301 has a finger portion 301a and a reel-fixing C-shaped portion 305 with arms 306a and 306b which clamp to the top and bottom of the reel bar 121. Arm 306a has a through hole 307a and arm 306b has a receiving hole 307b such that screw 341 can pass through hole 307a, through a hole in the reel bar 121, and then into hole 307b, where the thread of screw 341 acts to screw into hole 307b and thus fasten the tine 301 onto the reel bar 121.

Figure 4a shows an embodiment of a tine 201 in accordance with the present invention and a portion of reel bar 121, as well as a screw 241 for holding the tine 201 in place. The screw 241 may have any selected head, such as Phillips head, a Torx head, or a hex-shaped head, without limitation. Tine 201 has a metal element 202 and a fixing element 205. Metal element 202 has a finger portion 201a, a spring portion 203a, and a stub portion 204, which in Figure 4a can only be partially seen. Fixing element 205 is in this embodiment a plastic element with a main body portion 205b and a 'C'-shaped portion 205a with two arms, 206a and 206b, which are in effect two portions of the fixing element that are able to clamp either side (top and bottom respectively, in the orientations shown) of the reel bar 121. Arm 206a has a through hole 207a and arm 206b has a threaded receiving hole 207b, which also penetrates the main body portion 205b, for receipt of screw 241. Note that in other embodiments the hole 207b may not be threaded.

As can be seen in Figure 4b, C-shaped portion 205a of the fixing element 205 may be clipped around the reel bar 121 (thus conveniently holding the tine 201 in place) and screw 241 may be inserted through the through hole 207a, through the reel bar hole 127, and screwed into the receiving hole 207b, thus firmly affixing the tine 201 in place on the reel bar 121.

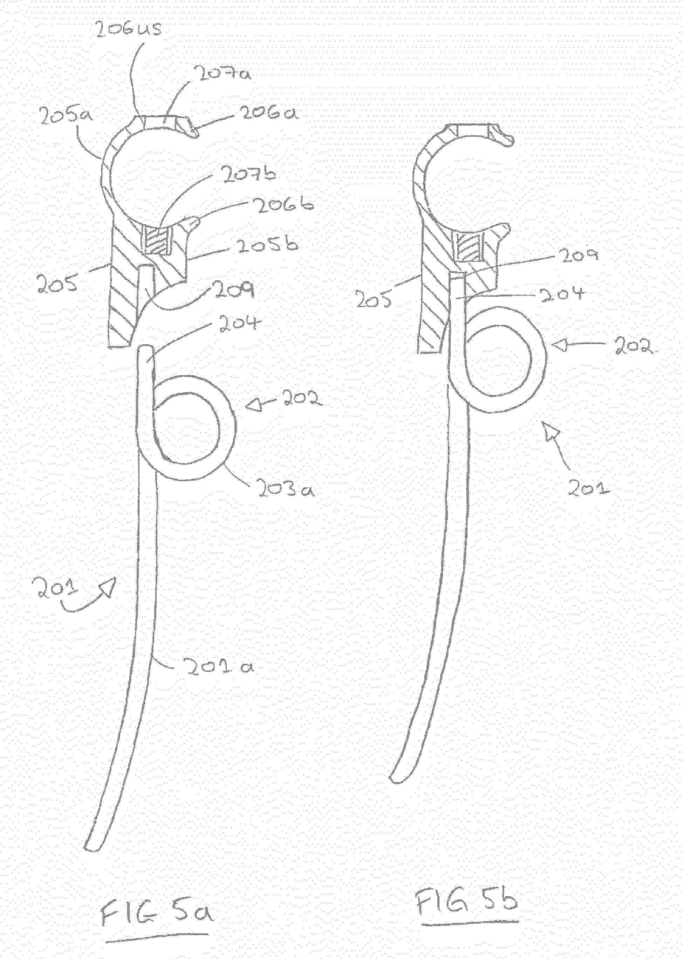

Figure 5a shows a cross-sectional view through the fixing element 205 of the tine 201 of Figures 3 and 4. Fixing element 205 is further provided with an engagement portion 209 defining a hole into which the stub 204 of metal tine element 202 may be inserted. The hole 209 is an interference fit such that once the stub 204 is inserted, the metal element 202 will remain fixedly in place. Figure 5a also shows the metal element 202 of the tine where stub 204 is more clearly visible. Figure 5b shows the fixing element 205 and metal element 202 in cooperative engagement as would be fitted to a reel bar. It can also be seen in Figs 5a and 5b that upper surface 206us of arm member 206a of the 'C'-shaped portion 205a of the fixing element is formed so as to provide a flattened surface for receipt of the underside of the head of screw 241. Alternatively, in other embodiments, the upper surface of arm 206a may be rounded or any other shape (e.g., having a tapered or countersunk hole to receive the screw 241).

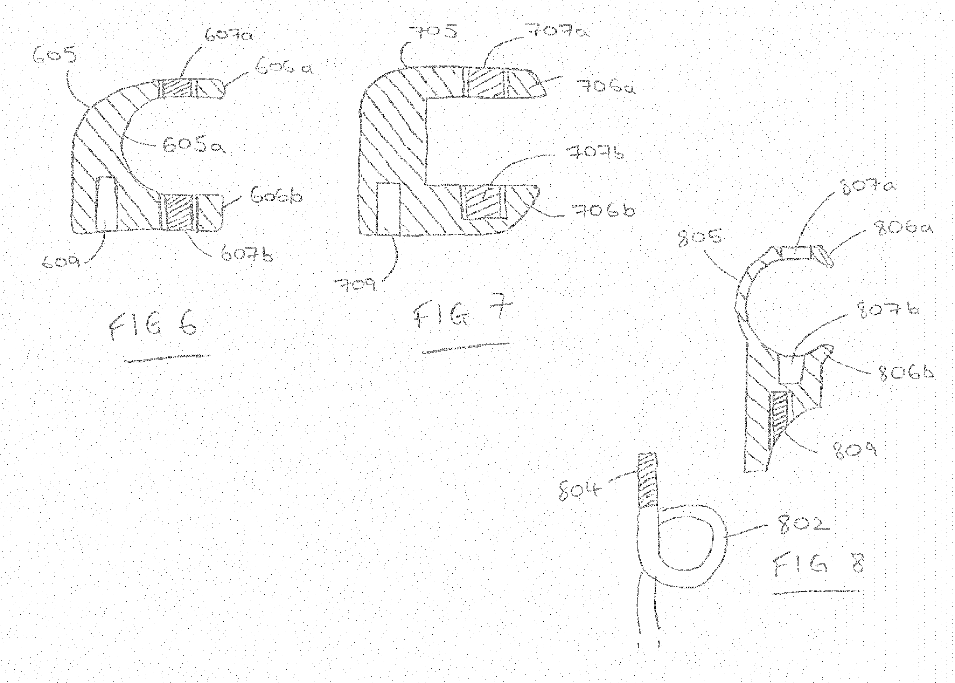

Figures 6 through 9 show variant embodiments of tine fixing elements according to the invention.

Figure 6 shows a variant fixing element 605 with a 'U'-shaped portion 605a with arms members 606a and 606b with holes 607a and 607b. In this variant, both holes 607a and 607b are threaded, and both are through holes rather than either being a blind hole as for hole 209 in the embodiment of Figures 3-5. Hole 609 is for the interference fit of a stub 204 of a metal element 202 as in Figures 3-5.

Figure 7 shows another variant fixing element 705 with arm 706a having a threaded through hole 707a and arm 707b having a threaded blind hole 707b. The hole 709 is again for the push or interference fit of a stub 204 of a metal element 202 as in Figures 3-5.

Figure 8 shows another embodiment in which fixing element 805 has an arm 806a having a non-threaded through hole 807a and an arm 806b having a non-threaded blind hole 807b. There is also provided a threaded hole 809 for receiving a threaded stub 804 of metal element 802. The threaded hole 809 may also be used in combination with the embodiments shown in Figures 6 and 7.

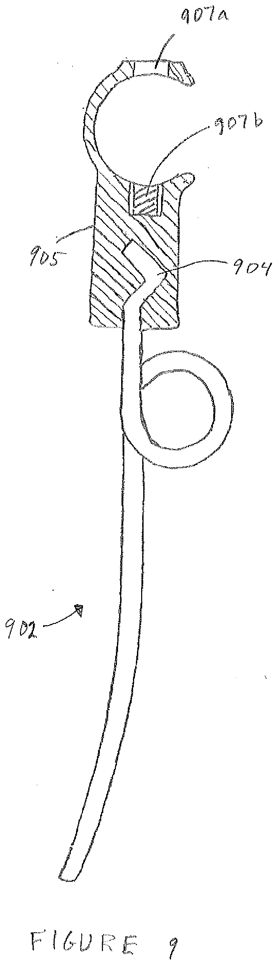

Figure 9 shows another embodiment in which fixing element 905 is formed around (e.g., by an injection moulding process) a stub 904 of metal element 902. The stub 904 may be bent or otherwise shaped so as to prevent movement within or removal from the fixing element 905 formed around the stub 904. Thus, once the stub 904 is formed, the metal element 902 may be permanently attached to the fixing element 905 (that is, the metal element 902 may not be simply removed from the fixing element 905 without damaging the metal element 902 or the fixing element 905). The fixing element 905 may have threaded or unthreaded holes 907a, 907b such as described above and shown in Figures 4a through 8.

## Claims

1. A tine (201) for attachment to a reel bar (121) defining a through hole (127) for fixing tines, the tine (201) comprising:
a plastic fixing element (205) comprising a reel fixing portion (205a), the reel fixing portion comprising a first arm (206a) and a second arm (206b) for affixing either side of the reel bar, the first arm (206a) defining a through hole (207a) for receiving a shank of a screw (241) and the second arm (206b) defining a receiving hole (207b) for receiving a threaded end of the screw such that the screw may be inserted through the first arm, through the through hole of the reel bar, and into the receiving hole to secure the tine to the bar;
**characterised by** a metal element (202) coupled to the plastic fixing element (205) and comprising a finger portion (201a) and a spring portion (203a).

2. A tine as claimed in claim 1 wherein the fixing element further defines an engagement portion (209) for the metal element.

3. A tine as claimed in claim 2 wherein the engagement portion is a hole (209, 609, 709, 809) for fitting a stub portion (204, 804) of the metal element.

4. A tine as claimed in claim 3 wherein the hole (209) provides a push-fit or interference fit for the stub portion of the metal element.

5. A tine as claimed in claim 3 or 4 wherein the stub portion (804) of the metal element comprises a screw thread.

6. A tine as claimed in claim 5 wherein the hole (809) comprises a thread.

7. A tine as claimed in claim 1 wherein the plastic fixing element (905) is moulded around a portion of the metal element (902).

8. A tine as claimed in any previous claim wherein the first arm and the second arm comprise opposed arms of a 'C'- (205a) or 'U'- (605a) shaped portion of the fixing element.

9. A tine as claimed in any previous claim wherein the through hole (607a, 707a) of the first arm of the fixing element is threaded.

10. A tine as claimed in any of claims 1 through 8 wherein the through hole (207a, 807a, 907a) of the first arm of the fixing element is unthreaded.

11. A tine as claimed in any previous claim wherein the receiving hole (207b, 607b, 707b, 907b) of the second arm of the fixing element is threaded.

12. A tine as claimed in any of claims through 10 wherein the receiving hole (807b) of the second arm of the fixing element is unthreaded.

13. A method of forming a tine (201) as claimed in any of claims 1 through 11 comprising providing a plastic fixing element (205) comprising a reel fixing portion (205a), the reel fixing portion comprising a first arm (206a) and a second arm (206b) for affixing either side of the reel bar, the first arm (206a) defining a through hole (207a) for receiving a shank of a screw (241) and the second arm (206b) defining a receiving hole (207b) for receiving a threaded end of the screw such that the screw may be inserted through the first arm, through the through hole of the reel bar, and into the receiving hole to secure the tine to the bar; and
**characterised by** further providing a metal element (202) comprising a finger portion (201 a) and a spring portion (203a) and securing the plastic fixing element (205) to the metal element (202).

14. The method of claim 13 wherein securing the plastic fixing element (205) to the metal element (202) comprises moulding the plastic fixing element around a portion of the metal element.

15. The method of claim 13 wherein securing the plastic fixing element (205) to the metal element (202) comprises inserting a stub (204, 804) of the metal element into a hole (209, 609, 709, 809) defined by the plastic fixing element.

## Patentansprüche

1. Zinke (201) für eine Befestigung an einem Haspelbalken (121), der eine Durchgangsbohrung (127) zum Befestigen von Zinken definiert, wobei die Zinke (201) das Folgende aufweist:
ein Kunststoffbefestigungselement (205) mit einem Haspelbefestigungsteil (205a), wobei das Haspelbefestigungsteil einen ersten Arm (206a) und einen zweiten Arm (206b) zum Befestigen beider Seiten des Haspelbalkens aufweist, wobei der erste Arm (206a) eine Durchgangsbohrung (207a) zum Aufnehmen eines Schafts einer Schraube (241) definiert und der zweite Arm (206b) eine Aufnahmebohrung (207b) zum Aufnehmen eines gewindebehafteten Endes der Schraube definiert, sodass die Schraube durch den ersten Arm, durch die Durchgangsbohrung des Haspelbalkens und in die Aufnahmebohrung geführt werden kann, um die Zinke an dem Balken zu befestigen; **gekennzeichnet durch**
ein Metallelement (202), das mit dem Kunststoffbefestigungselement (205) verbunden ist und ein Fingerteil (201a) und ein Federteil (203a) aufweist.

2. Zinke nach Anspruch 1, wobei das Befestigungselement weiterhin ein Eingriffsteil (209) für das Metallelement definiert.

3. Zinke nach Anspruch 2, wobei das Eingriffsteil eine Bohrung (209, 609, 709, 809) zum Einsetzen eines Stumpfteils (204, 804) des Metallelements ist.

4. Zinke nach Anspruch 3, wobei die Bohrung (209) eine Presspassung oder Übergangspassung für das Stumpfteil des Metallelements bereitstellt.

5. Zinke nach Anspruch 3 oder 4, wobei das Stumpfteil (804) des Metallelements ein Schraubengewinde aufweist.

6. Zinke nach Anspruch 5, wobei die Bohrung (809) ein Gewinde aufweist.

7. Zinke nach Anspruch 1, wobei das Kunststoffbefestigungselement (905) um einen Teil des Metallelements (902) herum geformt ist.

8. Zinke nach mindestens einem der vorhergehenden Ansprüche, wobei der erste Arm und der zweite Arm gegenüberliegende Arme eines C-förmigen Teils (205a) oder eines U-förmigen Teils (605a) des Befestigungselements aufweisen.

9. Zinke nach mindestens einem der vorhergehenden Ansprüche, wobei die Durchgangsbohrung (607a, 707a) des ersten Arms des Befestigungselements gewindebehaftet ist.

10. Zinke nach mindestens einem der Ansprüche 1 bis 8, wobei die Durchgangsbohrung (207a, 807a, 907a) des ersten Arms des Befestigungselements nicht gewindebehaftet ist.

11. Zinke nach mindestens einem der vorhergehenden Ansprüche, wobei die Durchgangsbohrung (207b, 607b, 707b, 907b) des zweiten Arms des Befestigungselements gewindebehaftet ist.

12. Zinke nach mindestens einem der Ansprüche 1 bis 10, wobei die Aufnahmebohrung (807b) des zweiten Arms des Befestigungselements nicht gewindebehaftet ist.

13. Verfahren zum Formen einer Zinke (201) nach mindestens einem der Ansprüche 1 bis 11, dem Folgenden:
Bereitstellen eines Kunststoffbefestigungselements (205) mit einem Haspelbefestigungsteil (205a), wobei das Haspelbefestigungsteil einen ersten Arm (206a) und einen zweiten Arm (206b) zum Befestigen beider Seiten des Haspelbalkens aufweist, wobei der erste Arm (206a) eine Durchgangsbohrung (207a) zum Aufnehmen eines Schafts einer Schraube (241) definiert und der zweite Arm (206b) eine Aufnahmebohrung (207b) zum Aufnehmen eines gewindebehafteten Endes der Schraube definiert, sodass die Schraube durch den ersten Arm, durch die Durchgangsbohrung des Haspelbalkens und in die Aufnahmebohrung geführt werden kann, um die Zinke an dem Balken zu befestigen; und weiterhin **gekennzeichnet durch**
Bereitstellen eines Metallelements (202), das ein Fingerteil (201a) und ein Federteil (203a) aufweist, und
Befestigen des Kunststoffbefestigungselements (205) an dem Metallelement (202).

14. Verfahren nach Anspruch 13, wobei das Befestigen des Kunststoffbefestigungselements (205) an dem Metallelement (202) das Formen des Kunststoffbefestigungselements um einen Teil des Metallelements herum aufweist.

15. Verfahren nach Anspruch 13, wobei das Befestigen des Kunststoffbefestigungselements (205) an dem Metallelement (202) das Einführen eines Stumpfs (204, 804) des Metallelements in eine durch das Kunststoffbefestigungselement definierte Bohrung (209, 609, 709, 809) aufweist.

## Revendications

1. Dent (201) destinée à être fixée sur une barre de rabatteur (121) définissant un orifice traversant (127) afin d'assurer la fixation des dents, la dent (201) comprenant :
un élément de fixation en matière plastique (205) comprenant une partie de fixation de rabatteur (205a), la partie de fixation de rabatteur comprenant un premier bras (206a) et un second bras (206b) à fixer de chaque côté de la barre de rabatteur, le premier bras (206a) définissant un orifice traversant (207a) afin de recevoir une tige d'une vis (241) et le second bras (206b) définissant un orifice de réception (207b) afin de recevoir une extrémité filetée de la vis de telle sorte que la vis peut être insérée à travers le premier bras, à travers l'orifice traversant de la barre de rabatteur et dans l'orifice de réception destiné à fixer la dent sur la barre ;
**caractérisée par** un élément métallique (202) couplé à l'élément de fixation en matière plastique (205) et comprenant une partie de doigt (201a) et une partie élastique (203a).

2. Dent selon la revendication 1, dans laquelle l'élément de fixation définit, en outre, une partie de couplage (209) pour l'élément métallique.

3. Dent selon la revendication 2, dans laquelle la partie de couplage est un orifice (209, 609, 709, 809) destiné à assembler une partie de souche (204, 804) de l'élément métallique.

4. Dent selon la revendication 3, dans laquelle l'orifice (209) assure un ajustement libre ou un ajustement serré pour la partie de souche de l'élément métallique.

5. Dent selon la revendication 3 ou 4, dans laquelle la partie de souche (804) de l'élément métallique comprend un filetage de vis.

6. Dent selon la revendication 5, dans laquelle l'orifice (809) comprend un filetage.

7. Dent selon la revendication 1, dans laquelle l'élément de fixation en matière plastique (905) est moulé autour d'une partie de l'élément métallique (902).

8. Dent selon l'une quelconque des revendications précédentes, dans laquelle le premier bras et le second bras comprennent des bras opposés d'une partie en forme de "C" (205a) ou de "U" (605a) de l'élément de fixation.

9. Dent selon l'une quelconque des revendications précédentes, dans laquelle l'orifice traversant (607a, 707a) du premier bras de l'élément de fixation est fileté.

10. Dent selon l'une quelconque des revendications 1 à 8, dans laquelle l'orifice traversant (207a, 807a, 907a) du premier bras de l'élément de fixation n'est pas fileté.

11. Dent selon l'une quelconque des revendications précédentes, dans laquelle l'orifice de réception (207b, 607b, 707b, 907b) du second bras de l'élément de fixation est fileté.

12. Dent selon l'une quelconque des revendications 1 à 10, dans laquelle l'orifice de réception (807b) du second bras de l'élément de fixation n'est pas fileté.

13. Procédé de formation d'une dent (201) selon l'une quelconque des revendications 1 à 11 comprenant la formation d'un élément de fixation en matière plastique (205) comprenant une partie de fixation de rabatteur (205a), la partie de fixation de rabatteur comprenant un premier bras (206a) et un second bras (206b) à fixer de chaque côté de la barre de rabatteur, le premier bras (206a) définissant un orifice traversant (207a) afin de recevoir une tige d'une vis (241) et le second bras (206b) définissant un orifice de réception (207b) afin de recevoir une extrémité filetée de la vis de telle sorte que la vis peut être insérée à travers le premier bras, à travers l'orifice traversant de la barre de rabatteur et dans l'orifice de réception destiné à fixer la dent sur la barre ; et
**caractérisé, en outre, par** la fourniture d'un élément métallique (202) comprenant une partie de doigt (201a) et une partie élastique (203a) et la fixation de l'élément de fixation en matière plastique (205) sur l'élément métallique (202).

14. Procédé selon la revendication 13, dans lequel la fixation de l'élément de fixation en matière plastique (205) sur l'élément métallique (202) comprend le moulage de l'élément de fixation en matière plastique autour d'une partie de l'élément métallique.

15. Procédé selon la revendication 13, dans lequel la fixation de l'élément de fixation en matière plastique (205) sur l'élément métallique (202) comprend l'insertion d'une partie de souche (204, 804) de l'élément métallique dans un orifice (209, 609, 709, 809) défini par l'élément de fixation en matière plastique.
